# DEMANDE DE BREVET EUROPEEN

(11) **EP 1 798 543 A1**
(43) Date de publication de la demande: **20.06.2007**
(21) Numéro de dépôt: 06291887.5
(22) Date de dépôt: 07.12.2006
(51) Int. Cl.: G01N 21/88

(54) **Rampe et procédé d'éclairage à diodes électroluminescentes de puissance pour un système de détection automatique de défauts**

(30) Priorité: 16.12.2005 FR 0513105
(71) Demandeur: Siemens VAI Metals Technologies SAS, 42400 Saint Chamond (FR)
(72) Inventeur: Desvaud, Jean-Louis, 78690 Les Essarts Le Roi (FR)
(74) Mandataire: Bentz, Jean-Paul

(57) **Abrégé**

Procédé d'éclairage selon lequel on dispose les diodes électroluminescentes (4) en au moins une rangée, alignées selon des intervalles égaux, dans un logement constituant une sorte de boîte à lumière aux parois (55,65) réfléchissantes, on produit une légère diffusion de la lumière issue des diodes électroluminescentes par un film (7) fermant la boîte à lumière et on concentre les rayons lumineux sortant de la boite à lumière à l'aide d'un dispositif réfléchissant (8), en un pinceau lumineux plat et étroit, dont la largeur est sensiblement égale à la longueur occupée par l'alignement des diodes.

## Description

La présente invention se rapporte à un dispositif d'éclairage à diodes électroluminescentes à haute puissance. Elle s'applique à des dispositifs d'éclairage sous forme de rampes destinés à être intégrés dans des systèmes de détection des défauts. Elle est particulièrement adaptée à assurer la fonction éclairage dans les systèmes d'inspection automatique des produits sous forme de bande et spécialement dans l'inspection de surface des bandes métalliques laminées.

Depuis quelques années les systèmes d'inspection automatique des produits en bande se sont développés. Ces techniques ont l'avantage d'être ni contraignantes pour l'opérateur, ni subjectives et elles peuvent être mises en oeuvre sur les lignes de production sans nécessiter l'utilisation d'une ligne spécifique pour l'inspection qui représentait une immobilisation de matériel, de moyens humains et de produit stockés sortis du circuit normal d'expédition. Il est cependant indispensable que ces dispositifs automatiques soient parfaitement fiables quant à la détection des défauts, et ils ne doivent ni en laisser passer, ce qui pénaliserait la qualité, ni en détecter en surnombre ce qui pénaliserait la productivité.

D'une manière générale ces dispositifs se composent de moyens de prises de vues dont l'axe optique est dirigé vers la surface à inspecter. Ces dispositifs comportent généralement une caméra munie d'un objectif permettant de concentrer les rayons lumineux en provenance du produit à observer sur un capteur photosensible constituant le dispositif de détection. Il est nécessaire de former une image de la surface du produit à inspecter sur le dispositif de détection.

On a tout d'abord utilisé les différents types de caméras disponibles capables de faire l'acquisition d'images correspondant à un certain champ visuel, à l'instar des méthodes utilisées pour la télévision, le champ défini correspond alors à la zone à inspecter. Cette méthode nécessite des éclairages puissants obtenus par les moyens classiques comme des lampes à fluorescence au néon. Ces dispositifs ont permis d'obtenir des premiers résultats mais les images obtenues manquaient du contraste nécessaire au classement automatique des images et à l'identification des défauts. Il est en effet nécessaire de former des images avec une résolution assez fine de façon à pouvoir détecter des défauts dont la taille de certains détails est réduite.

On a ensuite utilisé des caméras numériques du type matriciel et différents dispositifs d'éclairage ont été utilisés, comme des rampes à diodes électroluminescentes fonctionnant par impulsions et produisant des flashes de lumière On a aussi utilisé des fibres optiques permettant de guider la lumière au plus près de la zone à observer. Mais l'utilisation de caméras matricielles ont des inconvénients et présentent en particulier des défauts sur l'image dans les zones des bords et des angles. Lors du développement des capteurs photosensibles à transfert de charge, encore appelés capteurs CCD, la société déposante s'est avisé que ces capteurs numériques pouvaient permettre d'améliorer la sensibilité et la fiabilité des dispositifs de détection de défauts en particulier en éliminant les défauts d'angle en les intégrant, montés en barrettes, dans des caméras linéaires. En effet ces caméras permettent d'obtenir l'image d'une ligne sur la surface de la bande en une seule acquisition et on peut reconstituer une image à deux dimensions de la surface de la bande en faisant des acquisitions successives d'images du produit en défilement. Une image de la surface du produit est ainsi élaborée à partir de l'acquisition d'une succession de lignes. Mais il est alors nécessaire de disposer de moyens d'éclairages dont les caractéristiques lumineuses sont constantes et définies, ou du moins contrôlées. Il est en effet indispensable d'avoir des conditions d'éclairement maîtrisées pour l'acquisition d'une image ligne par ligne.

De plus dans certaines applications il est intéressant de combiner l'observation du produit sous l'éclairage fourni par la lumière additionnelle et celle issu de la lumière émise par le produit lui-même lorsqu'il est suffisamment chaud pour émettre dans le domaine de la lumière infrarouge. I1 est donc particulièrement intéressant de concevoir un dispositif d'éclairage capable de fournir une lumière froide, c'est à dire qui n'apporte pas d'énergie calorifique au produit à observer, et de la fournir de manière constante et continue.

Enfin la mise en oeuvre des dispositifs automatiques d'inspection de surface impose des contraintes, en particulier par leur encombrement, qui ne sont pas toujours faciles à respecter et il est nécessaire de prévoir des dispositifs compacts, étanches et refroidis pour pouvoir fonctionner dans une ambiance industrielle sévère. Ceci a pour effet de devoir installer le matériel de détection de défauts à des distances variables du produit à observer selon les applications, comme par exemple à la sortie d'un laminoir à froid ou à la sortie d'un laminoir à chaud. Il est donc tout à fait intéressant de concevoir un dispositif d'éclairage unique dont l'éclairement soit produit par un pinceau de rayons parallèles dont la convergence sur le produit à observer ne varie pas avec la distance.

Enfin il est avantageux d'avoir un système capable de travailler sur plusieurs couleurs de façon à pouvoir filtrer les perturbations provoquées par l'éclairage ambiant ou par l'atmosphère environnante.

Le dispositif de l'invention a pour but de résoudre tous ces problèmes en permettant de réaliser un dispositif d'éclairage dont les caractéristiques sont maîtrisées pour être utilisé dans un système d'inspection utilisant une caméra numérique linéaire à hautes performances. L'ensemble du dispositif de détection des défauts peut avoir un encombrement réduit permettant son installation à proximité immédiate de la bande en défilement. Cela permet de protéger l'ensemble du dispositif de l'environnement, de le refroidir et de le ventiler si les conditions ambiantes l'exigent. On peut aisément installer le dispositif dans un espace libre limité et installer aussi des moyens d'extraction de buées ou de tout autre agent qui pourrait polluer l'espace dans lequel doit se propager la lumière formant les images à détecter et à analyser.

Selon l'invention le dispositif d'éclairage (R) d'un produit en défilement (S) destiné à la détection de défauts de surface est constitué d'un ensemble support mécanique fermé (1) formant une boite allongée, constituant une rampe d'éclairage et comportant :
- une pluralité de diodes électroluminescentes (4) de puissance alignées en au moins une rangée et disposées côte à côte selon un pas régulier,
- un conduit de lumière à parois planes (55, 65) et réfléchissantes, parallèles entre elles et situées dans des plans sensiblement parallèles à celui (P₁) formé par les axes des diodes électroluminescentes,
- un film en matériau translucide (7) et diffusant disposé sur le trajet des rayons lumineux émis par les diodes électroluminescentes,
- un réflecteur (8) permettant de concentrer et de renvoyer les rayons lumineux vers l'extérieur du support fermé (1) au travers d'une fenêtre (9) formant une ouverture allongée ménagée sensiblement sur la longueur de la rampe,
- un couvercle transparent (10) permettant de fermer l'ouverture ménagée dans la rampe tout en laissant passer vers l'extérieur les rayons lumineux issus des diodes électroluminescentes (4).

Selon l'invention les parois (55, 65) du conduit de lumière sont avantageusement en métal poli, de même le film diffuseur (7) est en plexiglas dépoli.

Selon un mode de réalisation préférentiel de l'invention la surface (81) du réflecteur (8) est un cylindre parabolique droit. Le réflecteur (8) est disposé de manière à ce que son plan axial (P₂) soit sensiblement perpendiculaire au plan (P₁) défini par l'axe des diodes électroluminescentes (4). Cette disposition est telle que l'intersection du plan (P₁) défini par l'axe des diodes avec le plan (P₂) axial du réflecteur (8) est sensiblement située sur l'axe joignant les foyers des sections paraboliques du réflecteur.

Toujours de manière préférentielle le support mécanique (1) du dispositif d'éclairage (R) d'un produit en défilement (S) est fermé par une enveloppe constituée d'un tube étanche (13) obturé à ses deux extrémités et pourvu d'une fenêtre (9) munie d'une vitre transparente (10) disposée sensiblement sur toute la longueur de ladite enveloppe pour laisser le passage de la lumière d'éclairage. Le tube étanche (13) est ventilé et refroidi.

Selon un mode de réalisation avantageux de l'invention, les diodes électroluminescentes (4) sont connectées électriquement en série par groupes et forment une chaîne. Chaque chaîne est alimentée par un contrôleur de courant réglable.

Des sondes de température sont installées dans le tube étanche (13) pour mesurer la température interne moyenne.

L'ensemble de la rampe (R) porte des moyens de fixation réglables pour orienter et ajuster l'éclairage de la zone à observer.

Le procédé de l'invention permet l'éclairage en lumière froide d'un produit en défilement (S) destiné à l'acquisition d'images de la surface dudit produit par des caméras (C) numériques linéaires pour un système de détection de défauts, à l'aide d'un dispositif comprenant une source lumineuse constituée de diodes électroluminescentes (4) de puissance, selon ce procédé on dispose les diodes électroluminescentes (4) en au moins une rangée, alignées selon des intervalles égaux, dans un logement constituant une sorte de boîte à lumière aux parois (55, 65) réfléchissantes, on produit une légère diffusion de la lumière issue des diodes électroluminescentes par un film (7) fermant la boîte à lumière et on concentre les rayons lumineux sortant de la boîte à lumière à l'aide d'un dispositif réfléchissant (8), en un pinceau lumineux plat et étroit, dont la largeur est sensiblement égale à la longueur occupée par l'alignement des diodes.

Selon le procédé de l'invention, la distance du film (7) fermant la boîte à lumière aux diodes électroluminescentes (4) est déterminée en fonction du pas d'implantation des dites diodes électroluminescentes, le film (7) fermant la boîte à lumière étant constitué d'une matière transparente dépolie, comme du plexiglas dépoli.

Toujours selon le procédé de l'invention le réflecteur (8) renvoie les rayons lumineux dans une direction sensiblement perpendiculaire à l'axe d'émission des diodes électroluminescentes (4), la surface (81) du réflecteur (8) ayant la forme d'un cylindre parabolique droit.

Selon l'invention les rayons lumineux constituent un pinceau d'éclairage plats et sont sensiblement parallèles entre eux.

Toujours selon l'invention, les diodes électroluminescentes (4) contenues dans une même rampe (R) sont toutes de la même couleur, cette couleur est blanche, rouge ou verte.

Selon le procédé de l'invention on connecte électriquement les diodes électroluminescentes (4) en série par groupes constituant une chaîne, les diodes électroluminescentes (4) contenues dans une même rampe (R) ont une puissance unitaire égale et de valeur 1, 3 ou 5 watts.

Mais l'invention sera mieux comprise par la description d'un mode de réalisation.
- La figure 1 représente un dispositif de détection de défauts selon l'invention.
- La figure 2 représente une image de l'éclairement obtenu par le procédé de l'invention.
- la figure 3 représente en coupe une rampe d'éclairage selon l'invention.
- La figure 4a représente le détail d'une pièce formant le guide de lumière.
- La figure 4b représente le détail d'une autre pièce formant le conduit de lumière.

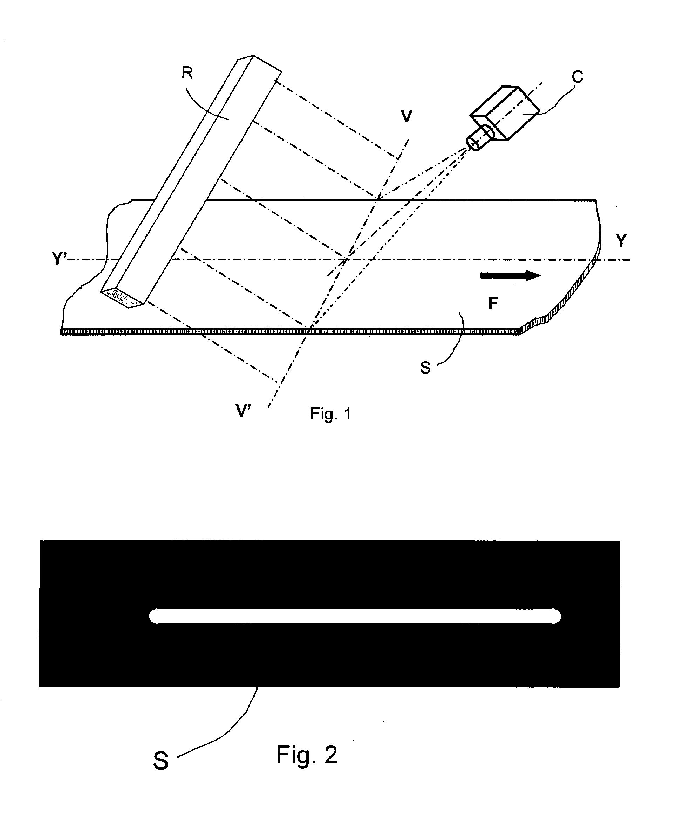

La figure 1 représente de façon schématique une disposition d'un système de détection de défaut de la surface d'un produit S en défilement F, et éventuellement de défauts présents aussi sous la surface. On a représenté un produit plat en forme de bande S, c'est-à-dire un produit dont une dimension, la largeur du produit, perpendiculaire à la direction de défilement est bien supérieure à la troisième, l'épaisseur du produit.. C'est pour ce cas de figure que le procédé de l'invention prend tout son intérêt mais il peut s'appliquer aussi à d'autres types de produits. Selon le procédé de l'invention on utilise une caméra C de type CCD linéaire, elle est orientée de façon à former sur la barrette de capteurs sensibles l'image d'une ligne V'V traversant la bande S.

L'ensemble des rayons lumineux réfléchis par la bande S dont la direction générale est celle de l'axe optique et qui sont ainsi concentrés par l'objectif sont contenus dans un secteur ou un volume angulaire appelé angle d'ouverture. Leur intersection avec la surface du produit forme une ligne de visée V'V généralement transverse par rapport à l'axe de défilement Y'Y de la bande S. Un système d'éclairage R illumine une portion de la bande en défilement au niveau de la ligne de visée. Un dispositif d'acquisition d'images en temps réel permet d'enregistrer une succession des vues prises par la caméra linéaire selon la ligne de visée V'V. Une image à deux dimensions de la surface de la bande est ensuite reconstituée en raccordant la succession des images prises par la caméra linéaire C de la surface du produit en défilement S.

Enfin des systèmes de traitement des signaux permettent l'analyse en temps réel des images délivrées par l'appareil de prises de vues. Le choix d'une caméra linéaire permet d'obtenir des images sans déformation et cela permet de limiter le dispositif d'éclairement à l'illumination d'une bande étroite encadrant la ligne de visée V'V. Cela permet d'élaborer un dispositif d'éclairement dont les paramètres de la lumière sont maîtrisés et constants. Il est en effet primordial que des variations de lumières ne puissent pas être enregistrées comme des défauts potentiels de la surface de la bande. De plus, selon le procédé de l'invention on éclaire la bande avec un pinceau lumineux dont les rayons sont parallèles, on peut ainsi s'affranchir de tout problème de focalisation du faisceau d'éclairage sur la bande et la distance de la rampe R à la bande ne nécessite pas de réglage particulier.

La figure 2 représente l'image de l'éclairement d'une surface blanche obtenue par le procédé de l'invention. La largeur du pinceau est définie pour la largeur maximale de la bande S, la largeur de son impact selon le sens du défilement F et l'intensité lumineuse sont constantes sur toute la largeur du produit S.

Le procédé d'éclairage de l'invention utilise comme source lumineuse des diodes électroluminescentes qui sont des sources de faible dimension que l'on peut installer selon un pas relativement réduit pour constituer un faisceau homogène et constant. L'émission de ces diodes se produit selon un volume de révolution axiale dont la répartition est proche d'une gaussienne. Le procédé de l'invention utilise la diffusion de la lumière à travers un film pour égaliser au mieux le flux lumineux selon la direction de la longueur de la rampe et la réflexion sur un miroir parabolique pour diriger les rayons lumineux dans une direction commune de façon à former un pinceau de rayons parallèles entre eux.

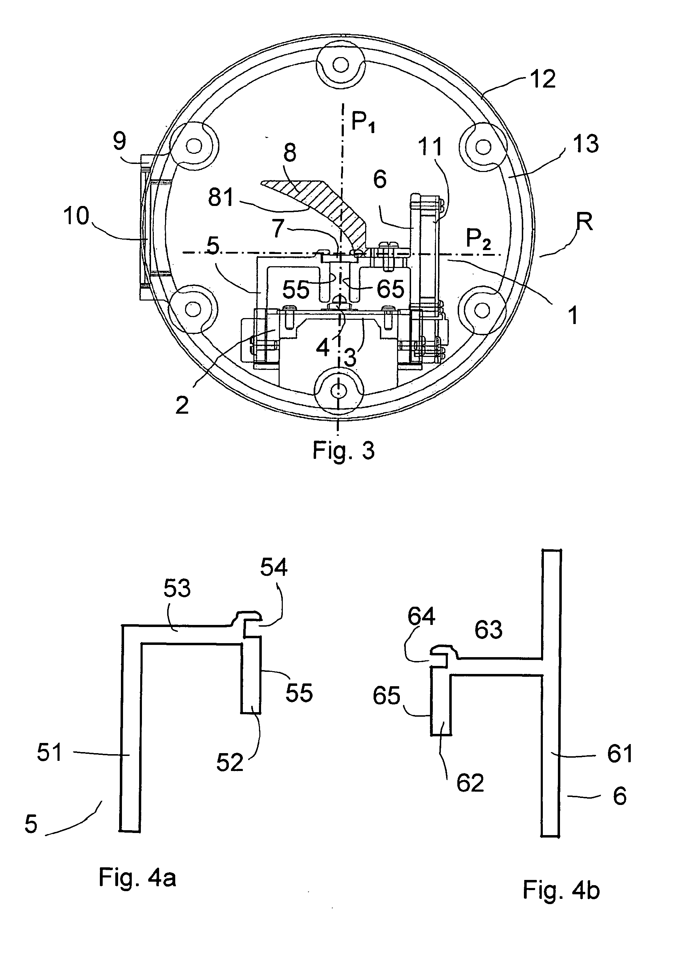

La figure 3 montre une coupe de la rampe selon un mode de réalisation de l'invention. La rampe peut avoir une forme générale tubulaire fermée à ses deux extrémités par des embouts circulaires. On constitue un châssis support 1 à l'aide, par exemple, de profilés et de plaques assemblés par boulonnage de façon à pouvoir être démontable. Ces pièces constituent la longueur de la rampe et portent à leurs extrémités les embouts circulaires 12 de fermeture. Une base 2 porte en sa partie centrale une plaque 3 qui reçoit les diodes électroluminescentes 4, alignées sur une seule rangée. Cette plaque 3 est de préférence réalisée selon la technique des circuits imprimés ce qui permet une fixation classique des diodes électroluminescentes par soudage des pattes des composants sur le circuit imprimé. Cette technique permet aussi de réaliser directement les connexions en série, ou selon un autre mode, des diodes électroluminescentes en fonction du mode d'alimentation qui a été retenu.

Deux pièces 5 et 6 sont fixées sur la base 2 pour constituer la boîte à lumière et supporter le dispositif optique de l'invention. Ces pièces sont représentées en détail sur les figures 4a et 4b. Ces pièces respectivement 5, 6 sont, par exemple, réalisées par filage ou par moulage, elles comportent respectivement chacune deux ailes parallèles 51, 52 et 61, 62 reliées par une âme, respectivement 53 et 63. Ces pièces ont pour longueur approximativement celle de la rangée de diodes et sont fixées, par exemple, par boulonnage, sur deux faces parallèles latérales de la base 2. La fixation est réalisée de manière à ce que les faces externes 55 et 65 des pièces 5 et 6 soient parallèles entre elles. Les ailes 51, 52, respectivement 61, 62 sont de hauteur différentes et calculées de façon à ce que les ailes les plus courtes viennent encadrer la rangée des diodes électroluminescentes 4. De même, la dimension des âmes 53 et 63 est calculée par rapport à la largeur de la base 2 pour réaliser cette disposition, représentée sur la figure 3.

Ainsi l'ensemble 1 formant un châssis support des différents composant, constitue aussi une boîte à lumière fermée. Les ailes 52 et 62, respectivement des pièces 5 et 6 forment un conduit de lumière dont les parois encadrent la rangée des diodes électroluminescentes. Les faces intérieures de ce conduit sont les faces externes 55 et 65 respectivement des pièces 5 et 6, elles sont parallèles entre elles et sont réalisées en métal poli pour être réfléchissantes. Ainsi tous les rayons lumineux émis par les diodes électroluminescentes à l'intérieur du volume de révolution axiale d'émission de chacune seront dirigés vers la sortie du conduit de lumière constitué par les faces 55 et 65 des pièces 5 et 6.

Les pièces 5 et 6 comportent à la base de l'âme, respectivement 53, 63 de chacune une rainure respectivement 54, 64 réalisée sur toute leur longueur. Ces rainures sont situées en bout de l'âme et en haut de l'aile la plus courte respectivement 52, 62 de telles sortes qu'elles se fassent face et constituent une sorte de glissière pouvant maintenir une pièce de section approximativement rectangulaire qui forme un couvercle de fermeture de la boîte à lumière formée par les faces parallèles 55 et 65 des pièces 5 et 6. On installe ce couvercle 7 dans le logement constitué des rainures 54, 64. Ce couvercle est réalisé en un matériau translucide et diffusant de manière à remplir la fonction d'un film générant une certaine diffusion des rayons lumineux qui le traversent. On pourra avantageusement, selon l'invention, le réaliser en une matière transparente dépolie comme le plexiglas dépoli.

Les diodes électroluminescentes 4 étant alignées et toutes fixées de la même façon leurs axes sont sensiblement parallèles et constituent un plan P₁. Ce plan est un plan de symétrie pour la boîte à lumière et il partage le conduit constitué des faces 55 et 65 respectivement des pièces 5 et 6, en son milieu, ainsi que le couvercle translucide 7. Les rainures 54, 64 et les pièces 5 et 6 ont toutes leurs cotes calculées pour que le couvercle 7 soit dans un plan perpendiculaire au plan P₁ formé par les axes de diodes électroluminescentes.

Un pièce constituant un réflecteur 8 est fixée sur l'âme 63 de la pièce 6. Cette pièce 8 a sensiblement la même longueur que les pièces 5 et 6, elle est rectiligne et sa section comporte une face extérieure de forme générale convexe et une face intérieure 81 de forme générale concave. Selon un mode préférentiel de l'invention, la face intérieure 81 opposée au côté de la fixation a la forme d'un cylindre parabolique droit.
C'est-à-dire que toutes les sections droites de sa face intérieure sont des paraboles.
La surface 81 étant un cylindre parabolique droit les axes de chaque section parabolique constituent un plan axial P₂ et on fixe la pièce 8 sur la pièce 6 de façon à ce que ce plan P₂ soit perpendiculaire au plan P₁ et à ce que la surface 81 soit en regard de la rangée de diodes électroluminescentes 4 et du diffuseur 7, ainsi que cela est représenté sur la figure 3. La surface inférieure 81 du réflecteur 8 est polie ou revêtue d'un dépôt lui permettant d'avoir les propriétés réfléchissantes d'un miroir. La fixation du réflecteur 8 sur l'âme de la pièce 6 se fait par boulonnage comme cela est représenté sur la figure 3 de façon à rendre aisés les réglages et alignements. Cette fixation est située du côté de la face opposée à la face 81 en forme de cylindre parabolique droit de façon à ménager le passage des rayons lumineux de l'autre côté. Bien entendu d'autres modes de fixation donnant les mêmes résultats peuvent aussi être imaginés.

Les diodes électroluminescentes 4 sont disposées côte à côte selon un pas qui dépend de leur taille et de leur puissance de telle sorte que les volumes de révolution de leur rayonnement se recoupent largement et ce recoupement est aisé à déterminé puisque la répartition du rayonnement autour de l'axe de chaque diode a l'allure d'une courbe de Gauss. Le flux lumineux est orienté selon la direction du plan P₁ par les réflexions sur les faces réfléchissantes 55 et 65 des pièces 5 et 6, néanmoins le flux lumineux résultant présente des ondulations d'intensité avec des maxima locaux situés dans l'axe de chaque diode. Ces ondulations sont largement atténuées après le passage des rayons lumineux au travers du film 7. La distance optimale entre les diodes et le film diffusant pour réaliser cette atténuation est fonction du pas d'implantation des diodes et on dimensionne les ailes 52, 54 respectivement 62, 64 des pièces 5, respectivement 6 pour l'obtenir. On défini aussi pour ce même objectif les caractéristiques et l'épaisseur du film 7. On réalise ainsi à la sortie du film 7 une source linéaire de lumière diffuse.

On sait par ailleurs que les rayons lumineux issus d'une source ponctuelle se réfléchissent sur un miroir parabolique en prenant tous la même direction qui est celle de l'axe de la parabole, lorsque la source est placée au foyer de la dite parabole. Le réflecteur 8 dont la surface interne 81 est un cylindre parabolique droit est donc installé de manière à ce que à ce que le foyer se trouve sensiblement au centre de la face de sortie des rayons lumineux du film 7. D'une manière pratique la surface 81 qui est un cylindre parabolique droit est calculée et disposée de façon à ce que l'axe des foyers des paraboles soit sensiblement situé à l'intersection des plans P₁ et P₂. Ainsi tous les rayons traversant le film 7 seront réorientés dans une direction parallèle au plan P₂ formant un pinceau lumineux dont les rayons seront en général parallèles entre eux et dont l'épaisseur dépend des caractéristiques de la surface 81. Cette épaisseur sera déterminée en fonction de la distance de la rampe R à laquelle se trouve la bande S à éclairer. On obtient ainsi une zone d'éclairement sensiblement de la forme souhaitée et illustrée sur la figure 2, les caractéristiques de cette zone d'éclairement ne nécessitent pas de réglage précis de la distance entre la rampe et la bande, ni de focalisation du faisceau lumineux puisque c'est un pinceau très peu divergent.

Selon la distance entre la rampe R et la bande S et la zone à éclairer on pourra choisir des diodes électroluminescentes de différentes puissance, de manière courante on pourra installer des diodes de puissance unitaire 1, 3 ou 5 watts. Il est aussi possible de choisir la couleur des diodes pour résoudre des problèmes de lumière parasite de l'éclairage ambiant de l'atelier dans lequel le dispositif de détection des défauts doit être installé. On peut ainsi disposer de façon courante de diodes de couleur rouge, verte ou blanche. Un filtre de même couleur est alors installé dans la caméra linéaire C.

De manière avantageuse l'aile extérieure 61 de la pièce 6 a été conçue de plus grande hauteur que l'aile extérieure 51 de la pièce 5 pour pouvoir fixer les modules d'alimentation des diodes à proximité immédiate des dites diodes.

En effet, et selon un mode préférentiel de réalisation de l'invention, les diodes sont connectées en série pour former des chaînes qui sont chacune alimentées par une alimentation réglable en courant. Le flux lumineux émis par une diode électroluminescente dépend de la température de la jonction et, pour garder un bon rendement lumineux, cette température de jonction sera maintenue par la régulation du courant, à une valeur inférieure à 80°C.

Aux deux extrémités du châssis support 1 sont fixés des embouts circulaires 12 qui permettent de fermer l'ensemble de la rampe dans un tube 13 fixé sur les embouts 12. Le tube 13 est muni d'une ouverture 9 ménagée sur toute sa longueur servant de fenêtre de passage aux rayons lumineux. Cette fenêtre est fermée par une vitre transparente 10. L'ensemble est réalisé de manière étanche par des procédés classiques de joints et des dispositifs de ventilation et de refroidissement ou de climatisation sont prévus pour garder la température sensiblement constante à l'intérieur de la rampe R et éviter un échauffement excessif des diodes électroluminescentes et des divers composants. Ces dispositifs de ventilation et de refroidissements, non représentés sur les figures sont bien connus et réalisés de façon classique, ils ne nécessitent pas de description détaillée. Des sondes de température sont aussi installées dans la rampe R aux endroits critiques pour mesurer la température interne moyenne et assurer la sécurité thermique des composants.

Enfin des moyens de fixation mécanique, non représentés, permettent d'installer la rampe d'éclairage dans l'environnement de l'équipement sur lequel elle doit fonctionner. Ces moyens de fixation permettent l'orientation et le réglage de la zone d'éclairement sur la portion du produit en défilement à observer.

Bien entendu l'invention ne se limite pas au mode de réalisation qui vient d'être décrit à titre d'exemple et peut s'appliquer à la détection de défauts de produits en acier ou constitués d'un autre métal et de différentes formes sans sortir du cadre de l'invention.

L'invention peut aussi s'appliquer à tout produit d'une autre matière ou élaboré par un autre procédé que le laminage, comme par exemple l'extrusion de matières plastiques, nécessitant l'utilisation d'un éclairage auxiliaire.

Il est aussi possible d'utiliser d'autres dispositions des composants à l'intérieur de la rampe ou d'autres formes de diffuseur et de réflecteur, ainsi que d'autres solutions pour le montage et la fixation mécanique de ces composants, sans sortir du domaine de l'invention.

Les signes de référence insérés après les caractéristiques techniques mentionnées dans les revendications, ont pour seul but de faciliter la compréhension de ces dernières et n'en limitent aucunement leur portée.

## Revendications

1. Dispositif d'éclairage (R) d'un produit en défilement (S) destiné à la détection de défauts de surface constitué d'un ensemble support mécanique fermé (1) formant une boite allongée, constituant une rampe d'éclairage et comportant :
- une pluralité de diodes électroluminescentes (4) de puissance alignées en au moins une rangée et disposées côte à côte selon un pas régulier,
- un conduit de lumière à parois planes (55, 65) et réfléchissantes, parallèles entre elles et situées dans des plans sensiblement parallèles à celui (P₁) formé par les axes des diodes électroluminescentes,
- un film en matériau translucide (7) et diffusant disposé sur le trajet des rayons lumineux émis par les diodes électroluminescentes,
- un réflecteur (8) permettant de concentrer et de renvoyer les rayons lumineux vers l'extérieur du support fermé (1) au travers d'une fenêtre (9) formant une ouverture allongée ménagée sensiblement sur la longueur de la rampe,
- un couvercle transparent (10) permettant de fermer l'ouverture ménagée dans la rampe tout en laissant passer vers l'extérieur les rayons lumineux issus des diodes électroluminescentes (4).

2. Dispositif d'éclairage (R) d'un produit en défilement (S) selon la revendication 1 **caractérisé en ce que** les parois (55, 65) du conduit de lumière sont en métal poli.

3. Dispositif d'éclairage (R) d'un produit en défilement (S) selon l'une des revendications 1 ou 2 **caractérisé en ce que** le film diffuseur (7) est en plexiglas dépoli.

4. Dispositif d'éclairage (R) d'un produit en défilement (S) selon l'une des revendications 1 à 3 **caractérisé en ce que** la surface (81) du réflecteur (8) a la forme d'un cylindre parabolique droit.

5. Dispositif d'éclairage (R) d'un produit en défilement (S) selon la revendication 4 **caractérisé en ce que** le plan axial (P₂) du réflecteur parabolique (8) est sensiblement perpendiculaire au plan (P₁) défini par l'axe des diodes électroluminescentes (4).

6. Dispositif d'éclairage (R) d'un produit en défilement (S) selon la revendication 5 **caractérisé en ce que** l'intersection du plan (P₁) défini par l'axe des diodes avec le plan (P₂) axial du réflecteur (8) est sensiblement située sur l'axe joignant les foyers des sections paraboliques du réflecteur.

7. Dispositif d'éclairage (R) d'un produit en défilement (S) selon l'une quelconque des revendications 1 à 6 **caractérisé en ce que** le support mécanique (1) est fermé par une enveloppe constituée d'un tube étanche (13) obturé à ses deux extrémités et pourvu d'une fenêtre (9) munie d'une vitre transparente (10) disposée sensiblement sur toute la longueur de ladite enveloppe pour laisser le passage de la lumière d'éclairage.

8. Dispositif d'éclairage (R) d'un produit en défilement (S) selon la revendication 7 **caractérisé en ce que** le tube étanche (13) est ventilé et refroidi.

9. Dispositif d'éclairage (R) d'un produit en défilement (S) selon l'une des revendications 1 à 8 **caractérisé en ce que** les diodes électroluminescentes (4) sont connectées électriquement en série par groupes et forment une chaîne.

10. Dispositif d'éclairage (R) d'un produit en défilement (S) selon la revendication 9 **caractérisé en ce que** chaque chaîne est alimentée par un contrôleur de courant réglable.

11. Dispositif d'éclairage (R) d'un produit en défilement (S) selon l'une des revendications 1 à 10 **caractérisé en ce que** des sondes de température sont installées dans le tube étanche (13) pour mesurer la température interne moyenne.

12. Dispositif d'éclairage (R) d'un produit en défilement (S) selon l'une des revendications 1 à 11 **caractérisé en ce que** l'ensemble de la rampe (R) porte des moyens de fixation réglables pour orienter et ajuster l'éclairage de la zone à observer.

13. Procédé d'éclairage en lumière froide d'un produit en défilement (S) destiné à l'acquisition d'images de la surface dudit produit par des caméras (C) numériques linéaires pour un système de détection de défauts, à l'aide d'un dispositif comprenant une source lumineuse constituée de diodes électroluminescentes (4) de puissance, **caractérisé en ce que** l'on dispose les diodes électroluminescentes (4) en au moins une rangée, alignées selon des intervalles égaux, dans un logement constituant une sorte de boîte à lumière aux parois (55, 65) réfléchissantes, que l'on produit une légère diffusion de la lumière issue des diodes électroluminescentes par un film (7) fermant la boîte à lumière et **en ce que** l'on concentre les rayons lumineux sortant de la boîte à lumière à l'aide d'un dispositif réfléchissant (8), en un pinceau lumineux plat et étroit, dont la largeur est sensiblement égale à la longueur occupée par l'alignement des diodes.

14. Procédé d'éclairage d'un produit en défilement (S) selon la revendication 13 **caractérisé en ce que** la distance du film (7) fermant la boîte à lumière aux diodes électroluminescentes (4) est déterminée en fonction du pas d'implantation des dites diodes électroluminescentes.

15. Procédé d'éclairage d'un produit en défilement (S) selon l'une des revendications 13 ou 14 **caractérisé en ce que** le film (7) fermant la boîte à lumière est constitué d'une matière transparente dépolie.

16. Procédé d'éclairage d'un produit en défilement (S) selon la revendication 15 **caractérisé en ce que** le film (7) fermant la boîte à lumière est en plexiglas dépoli.

17. Procédé d'éclairage d'un produit en défilement (S) selon la revendication 13 **caractérisé en ce que** la surface (81) du réflecteur (8) a la forme d'un cylindre parabolique droit.

18. Procédé d'éclairage d'un produit en défilement (S) selon la revendication 17 **caractérisé en ce que** le réflecteur (8) renvoie les rayons lumineux dans une direction sensiblement perpendiculaire à l'axe d'émission des diodes électroluminescentes (4).

19. Procédé d'éclairage d'un produit en défilement (S) selon l'une des revendications 13 à 18 **caractérisé en ce que** les rayons lumineux constituant le pinceau d'éclairage sont sensiblement parallèles entre eux.

20. Procédé d'éclairage d'un produit en défilement (S) selon l'une des revendications 13 à 19 **caractérisé en ce que** les diodes électroluminescentes (4) contenues dans une même rampe (R) sont toutes de la même couleur.

21. Procédé d'éclairage d'un produit en défilement (S) selon la revendication 20 **caractérisé en ce que** les diodes électroluminescentes (4) contenues dans une même rampe (R) sont de couleur blanche, rouge ou verte.

22. Procédé d'éclairage d'un produit en défilement (S) selon l'une des revendications 13 à 21 **caractérisé en ce que** les diodes électroluminescentes (4) sont électriquement connectées en série par groupes constituant une chaîne.

23. Procédé d'éclairage d'un produit en défilement (S) selon la revendication 22 **caractérisé en ce que** les diodes électroluminescentes (4) contenues dans une même rampe (R) ont une puissance unitaire égale et de valeur 1, 3 ou 5 watts.
